# FASCICULE DE BREVET EUROPEEN

(11) **EP 0 511 891 B1**
(45) Date de publication et mention de la délivrance du brevet: **15.03.1995**
(21) Numéro de dépôt: 92401072.1
(22) Date de dépôt: 16.04.1992
(51) Int. Cl.: F16L 37/08, F16L 37/088

(54) **Elément de connexion pour le raccordement rapide d'un tube**
Verbindungselement zur Schnellkupplung eines Rohres
Connector for the quick coupling of a tube

(30) Priorité: 29.04.1991 FR 9105267
(43) Date de publication de la demande: 04.11.1992
(73) Titulaire: Etablissements CAILLAU, F-92130 Issy-les-Moulineaux (FR)
(72) Inventeur: Calmettes, Lionel, F-41200 Romorantin Lanthenay (FR); Detable, Pascal, F-41130 Villedieu (FR)
(74) Mandataire: Descourtieux, Philippe

(56) Documents cités:
- EP-A- 0 410 842
- EP-A- 0 414 173
- DE-A- 2 948 560
- US-A- 3 453 005
- US-A- 4 640 534

## Description

On connaît déjà par le brevet EP-A-410.842, qui présente les caracteristiques du préambule de la revendication 1, un élément de connexion rapide entre un tuyau souple, par exemple en caoutchouc, et un tube en matériau rigide, tel que du métal, ou semi-rigide, tel qu'une matière plastique. Un tel élément de connexion est constitué par un ensemble de deux douilles coaxiales, interne et externe, définissant entre elles un espace annulaire comportant un organe de fermeture à l'une de ses extrémités. Cet organe est lui-même lié à un manchon sensiblement cylindrique dont l'extrémité libre définit l'entrée de l'élément, cependant que lesdites douilles sont susceptibles d'enserrer l'extrémité d'un tuyau.

Avant l'emmanchement du tube dans l'entrée de l'élément, un joint torique d'étanchéité est situé dans une sorte de logement prévu sur la face intérieure de la douille interne.

D'autre part, des moyens sont prévus sur le manchon de l'élément pour assurer l'immobilisation axiale du tube en coopérant avec un épaulement radial de ce dernier, placé à une distance appropriée de son extrémité libre.

On connaît également par le brevet EP-A-440.564 qui est état de la technique selon l'Article 54(3) CBE, un élément de connexion rapide du genre en question. Il existe cependant, dans ce cas, un véritable logement du joint d'étanchéité formé dans la douille interne et ce logement est fermé, du côté de l'entrée de l'élément de connexion, par une paroi radiale annulaire distincte de la douille interne et fixée à celle-ci.

La structure d'un tel élément de connexion rend sa fabrication particulièrement économique, puisqu'il peut être réalisé au moyen de tôles métalliques minces convenablement embouties, la fixation des différents organes étant généralement assurée par de simples sertissages.

Lorsque le tube à emmancher dans l'élément de connexion présente un petit diamètre il est souvent avantageux de conformer la zone à emmancher de façon qu'elle comporte successivement, depuis l'extrémité du tube, d'une part, une portion cylindrique destinée à venir en contact avec le joint d'étanchéité de l'élément de connexion, d'autre part, une rampe annulaire se terminant par un épaulement radial susceptible de constituer une butée coopérant avec les moyens de verrouillage prévus sur l'élément de connexion.

C'est ainsi que l'on connaît déjà, notamment par la demande publiée DE-A-2.948.560 ou par le brevet US-A-4.460.534 un élément de connexion rapide dans lequel les moyens de verrouillage prévus sur ledit élément comprennent une bague fendue, élastiquement déformable dans le sens radial. Une telle bague est disposée dans un logement annulaire dont les faces radiales, interne et externe, constituent des butées axiales pour ladite bague, limitant ainsi ses possibilités de déplacement axial. Après introduction du tube dans l'élément de connexion, la bague fendue constitue une butée pour l'épaulement du tube et assure ainsi l'immobilisation axiale de ce dernier.

Toutefois, les réalisations proposées par les deux documents précités ne sont pas directement applicables à la technique de fabrication de l'élément de connexion décrit par le brevet EP-A-440.564. Elles exigent en effet une pièce massive dans laquelle est ménagé, par usinage, le logement annulaire de la bague fendue.

L'invention a donc pour objet un élément de connexion susceptible d'être fabriqué selon la technique avantageuse exposée dans le brevet EP-A-440.564 tout en permettant l'emmanchement d'un tube susceptible d'être immobilisé axialement par des moyens complémentaires du type de ceux décrits par les documents DE-A-2.948.560 ou US-A-4.460.534.

L'élément de connexion selon l'invention comporte alors les dispositions figurant dans la partie caractérisante de la revendication 1.

Grâce à ces dispositions, la fabrication d'un élément de connexion ne nécessite que des opérations simples et peu onéreuses tout en conduisant à des réalisations légères.

L'invention sera mieux comprise et diverses caractéristiques secondaires ainsi que ses avantages apparaîtront au cours de la description qui va suivre d'exemples de réalisation en référence aux dessins annexés dans lesquels :
- la figure 1 est une vue en coupe axiale d'un élément de connexion selon l'invention, après raccordement du tube qu'il est destiné à recevoir
- La figure 2 est une coupe suivant **II-II** de la figure 1
- La figure 3 est une vue en perspective d'une variante avantageuse de la bague fendue, susceptible d'être montée sur l'élément de connexion selon la figure 1
- La figure 4 est une vue en coupe d'une variante de réalisation de l'élément de connexion représenté sur la figure 1
- La figure 5 est une vue en perspective de la bague fendue utilisée sur l'élément de connexion selon la figure 4
- La figure 6 est une coupe selon **VI-VI** de la figure 4
- La figure 7 est une vue analogue à la figure 6 dans le cas d'une variante de réalisation de la douille
- La figure 8 est une vue partielle suivant la flèche **F** de la figure 7

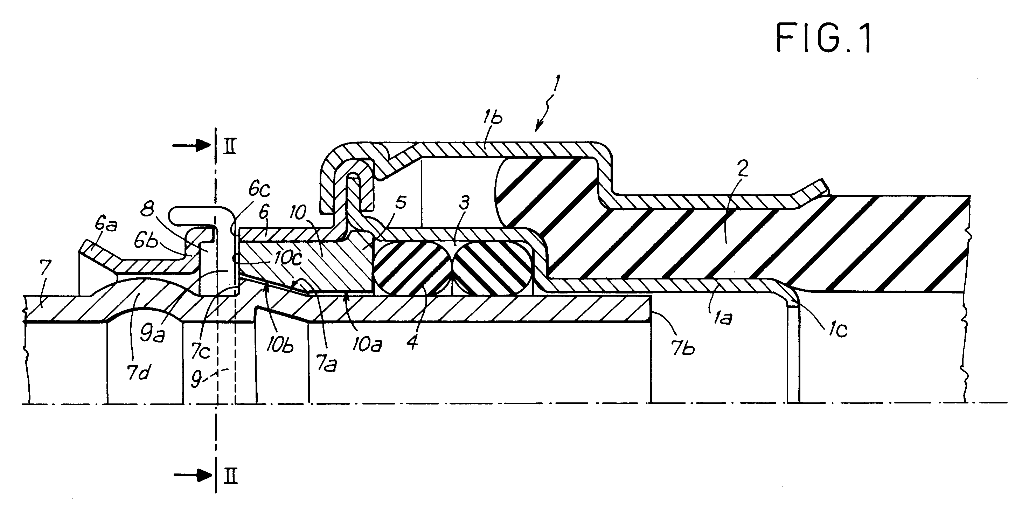

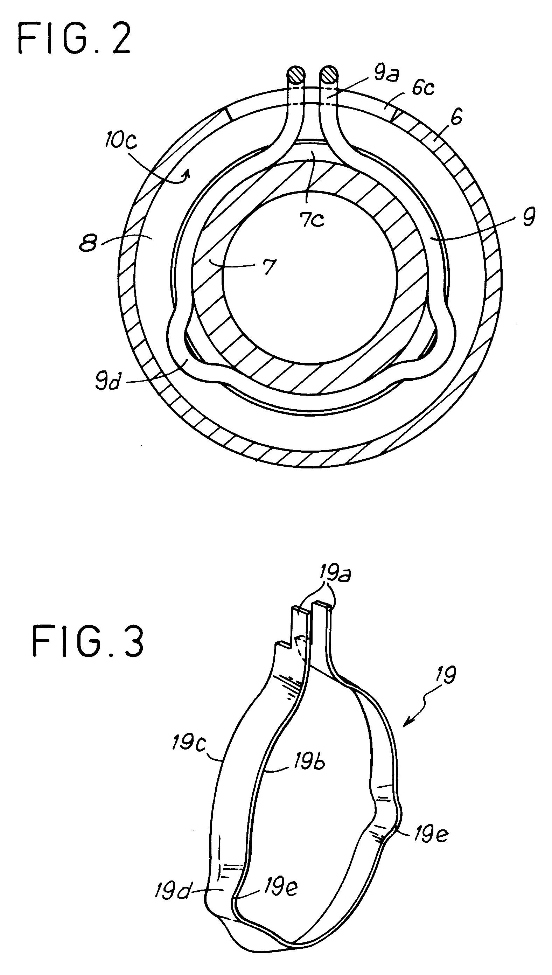

Si l'on se reporte tout d'abord aux figures 1 et 2, on voit un élément de connexion, désigné par la référence générale ***1***, monté à l'extrémité du tuyau souple ***2*** selon la technique exposée dans le document EP-A-440.564.

Dans l'exemple représenté, la douille interne ***1a*** de l'élément de connexion reçoit, dans un logement annulaire ***3***, au moins un joint torique ***4***. Une paroi radiale annulaire ***5*** est fixée aussi bien à la douille interne ***1a*** qu'à la douille externe ***1b*** et au manchon ***6*** au moyen de sertissages convenables qui ont été décrits dans le document précité.

L'élément de connexion est destiné, dans des conditions que l'on va préciser, à permettre le raccordement rapide d'un tube ***7***, lui-même susceptible d'être réalisé en matériaux divers, par exemple en un matériau rigide, tel que du métal, ou semi-rigide tel qu'une matière plastique.

Bien évidemment, l'élément de connexion ***1*** comporte, à partir de son extrémité d'entrée ***6a*** pour le tube ***7***, un alésage dont le diamètre est sensiblement égal au diamètre extérieur du tube ***7***, au moins sur une portion notable de sa longueur. Comme on le voit sur la figure 1, l'alésage s'étend depuis l'extrémité d'entrée ***6a*** jusqu'à la douille interne ***1a***.

A partir de l'extrémité d'entrée ***6a*** on trouve successivement, un logement annulaire ***8***, dans lequel une bague fendue ***9*** est immobilisée axialement, d'autre part, une douille ***10*** dont l'extrémité axiale la plus éloignée de l'entrée ***6a*** constitue la paroi radiale ***5*** mentionnée plus haut. Ces éléments constituent les moyens d'immobilisation axiale du tube ***7*** et ils vont maintenant être décrits de façon détaillée.

Dans l'exemple représenté, la douille ***10*** est constituée par une pièce massive, rapportée sur la douille interne ***1a*** de l'élément de connexion. Elle présente une portion cylindrique ***10a*** dont le diamètre intérieur est sensiblement égal au diamètre du tube ***7***. Du côté de l'orifice d'entrée ***6a***, la douille ***10*** comporte cependant une portion tronconqiue évasée ***10b*** dont l'extrémité ***10c*** constitue la face radiale interne du logement annulaire ***8***. Ce dernier est d'autre part délimité par le manchon cylindrique ***6*** dont l'épaulement ***6b*** constitue la face radiale externe du logement ***8***.

Entre les deux faces radiales ***10c*** et ***6b*** du logement ***8*** se trouve la bague fendue ***9***, qui comme on le voit sur la figure 1, peut être constituée par une anneau de fil en "acier à ressort". A l'état libre, le diamètre de la bague ***9*** est au plus égal et de préférence légèrement inférieur au diamètre du tube ***7***. Les deux bords de la fente prévue dans l'anneau sont pourvus chacun d'une patte radiale ***9a*** faisant saillie à l'extérieur du logement ***8*** en traversant une ouverture ***6c*** ménagée dans la paroi du manchon ***6***. D'autre part, ainsi qu'on le voit bien sur la figure 2, la bague ***9*** comporte deux nervures ***9d*** faisant radialement saillie vers l'extérieur de la bague. Tout en laissant à la bague la possiblité de se dilater radialement dans son logement ***8***, ces nervures facilitent le centrage pour des raisons qui apparaîtront plus loin.

On décrira plus loin, en se reportant à la figure 3 une variante avantageuse de la bague fendue ***9***.

Le tube ***7*** présente, de façon connue, une rampe annulaire ***7a***, située à une distance appropriée de son extrémité ***7b***, en pratique sensiblement inférieure à la longueur de l'alésage de l'élément de connexion entre son entrée ***6a*** et l'extrémité ***1c*** de la douille interne ***1a***. Du côté opposé à l'extrémité ***7b***, la rampe ***7a*** constitue un épaulement radial ***7c*** sur la paroi extérieure du tube.

La rampe ***7a***, qui forme une portion tronconique du tube, peut être obtenue, comme on l'a représenté, par une déformation convenable de la paroi du tube ***7*** au moment de sa fabrication ou, au contraire, être constituée par un élément rapporté et fixé au tube, par exemple par collage ou tout autre moyen analogue.

Ainsi qu'on le voit sur la figure 1, le tube ***7*** comporte un léger renflement ***7d***, situé au-delà de la rampe ***7a***, ce renflement étant de préférence prévu dans le cas où le tube ***7*** présente un diamètre relativement faible. Le diamètre maximal du renflement ***7b*** est sensiblement égal au diamètre maximal de la rampe ***7a***.

Le raccordement du tube ***7*** dans l'élément s'effectue de la façon suivante. Il suffit d'emmancher l'extrémité ***7b*** du tube et la partie cylindrique qui la suit dans l'entrée ***6a*** de l'élément. Le tube pénètre d'abord dans la portion d'alésage constituée par le manchon ***6***, puis traverse la bague fendue ***9*** en provoquant, si nécessaire, une légère extension radiale de celle-ci. Le tube écrase ensuite le ou les joints ***4*** et atteint enfin la zone terminale de la douille interne ***1a***. Ainsi qu'on l'a déjà indiqué, la longueur de la partie cylindrique du tube suivant son extrémité ***7b*** n'a pas besoin d'être définie de façon précise pourvu que cette extrémité ne risque pas de dépasser ni même d'atteindre l'extrémité ***1c*** de la douille interne ***1a***.

En effet, dans la phase finale de l'emmanchement du tube ***7***, la rampe ***7a*** atteint la bague ***9*** et provoque sa dilatation radiale dans le logement ***8***. Lorsque l'épaulement ***7c*** a lui même dépassé la bague ***9***, celle-ci se rétracte élastiquement pour constituer une butée axiale pour l'épaulement ***7c***. La bague ***9*** étant immobilisée entre les faces radiales ***6b*** et ***10c*** du logement ***8***, le tube ***7*** est lui-même axialement fixé dans l'élément de connexion ***1***. La portion tronconique ***10b*** de la douille ***10*** permet, après verrouillage axial du tube, de recevoir la rampe ***7a*** et constitue éventuellement une butée axiale pour le tube, dans le sens de l'emmanchement.

On soulignera enfin, que dans le cas où il existe, le renflement ***7d*** du tube ***7*** améliore, si besoin est, le centrage du tube dans l'élément et, par conséquent, la tenue du raccordement vis-à-vis des vibrations auxquelles le tube ***7*** peut être soumis.

Si l'on désire démonter le raccordement et extraire le tube ***7*** de son élément, il suffit, à l'aide d'un outil tel qu'un tournevis, d'écarter les pattes radiales ***9a*** de la bague ***9*** pour provoquer sa dilatation radiale. Dès que le diamètre intérieur de la bague est supérieur à celui de l'épaulement ***7c***, on peut facilement extraire le tube de l'élément de connexion.

Si l'on se reporte maintenant à la figure 3, on voit une variante de la bague fendue décrite plus haut. Elle peut avantageusement remplacer cette dernière, pratiquement sans aucune modification de la structure et des dimensions du logement ***8***. Les éléments déjà décrits porteront les mêmes références augmentées de 10.

Dans cette variante le bague ***19*** est constituée par une tôle mince, de forme tronconique, correspondant de préférence à celle de la rampe ***7a*** du tube. Le diamètre de la petite base ***19b*** est, à l'état libre de la bague, au plus égal et de préférence légèrement inférieur à celui du tube ***7***. En revanche, dans les mêmes conditions, le diamètre de la grande base ***19c*** est au moins égal au diamètre du tube ***7*** et cette grande base est située, dans le logement ***8***, du côté de l'entrée ***6a*** de l'élément de connexion.

Pour faciliter le centrage de la bague dans le logement ***8*** il est prévu une ou plusieurs nervures longitudinales ***19d***, embouties dans la paroi tronconique de la bague. Ces nervures, de forme sensiblement cylindrique, font radialement saillie sur la paroi extérieure de la bague, de façon importante du côté de la petite base ***19b***.

De préférence, la longueur axiale de la bague ***19*** correspond à celle du logement ***8*** de sorte que seules les extrémités échancrées des pattes radiales ***19a*** traversent l'ouverture ***6c*** et font saillie à l'exérieur du manchon ***6***.

La mise en place et le démontage du tube ***7*** s'effectuent de la façon décrite plus haut, le verrouillage du tube étant assuré par l'appui de l'épaulement ***7c*** du tube sur la petite base ***19b*** de la bague ***19***. A cet effet, il sera avantageux que le bord longitudinal ***19e*** des nervures ***19d*** soit légèrement en retrait par rapport au plan de la petite base ***19b*** de la bague.

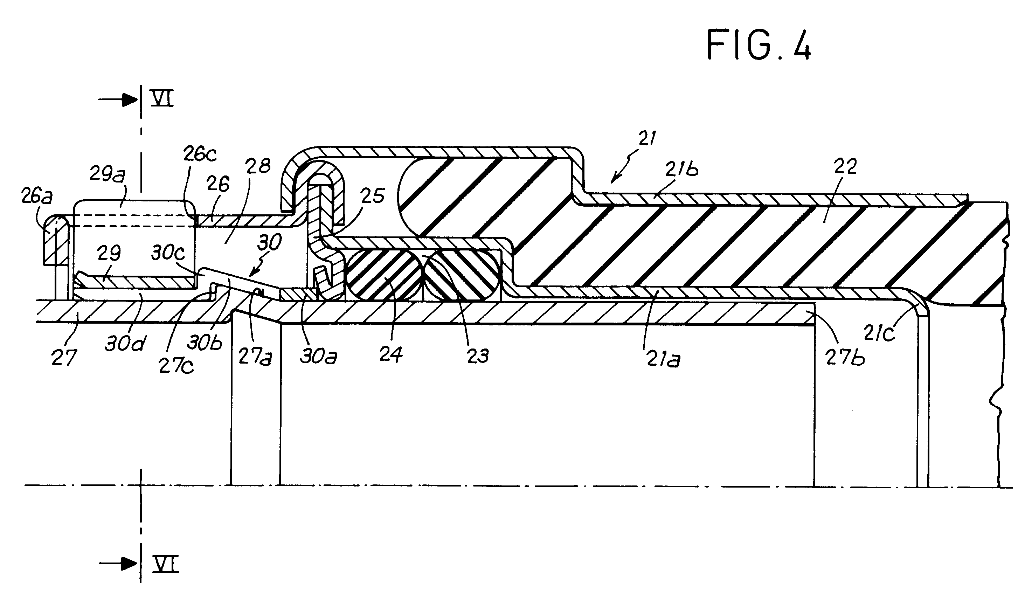

Si l'on se reporte enfin aux figures 4 à 6 on voit une variante de réalisation de l'élément de connexion selon l'invention. Les éléments déjà décrits en référence aux figures 1 et 2 portent les mêmes repères augmentés de 20.

L'élément de connexion ***21*** comprend les douilles interne ***21a*** et externe ***21b*** assemblées par sertissage, d'une part, à la paroi radiale ***25*** fermant le logement ***23*** des joints ***24***, d'autre part, au manchon cylindrique ***26*** dont l'extrémité ***26a***, constitue l'entrée de l'alésage de l'élément.

La douille ***30*** est ici indépendante de la paroi ***25***. Elle se réduit en fait à un manchon mince, comportant une portion cylindrique ***30a*** et une portion tronconique ***30b***. Cette dernière est prolongée, au-delà de son extrémité ***30c***, par une pluralité de pattes ***30d*** radialement flexibles.

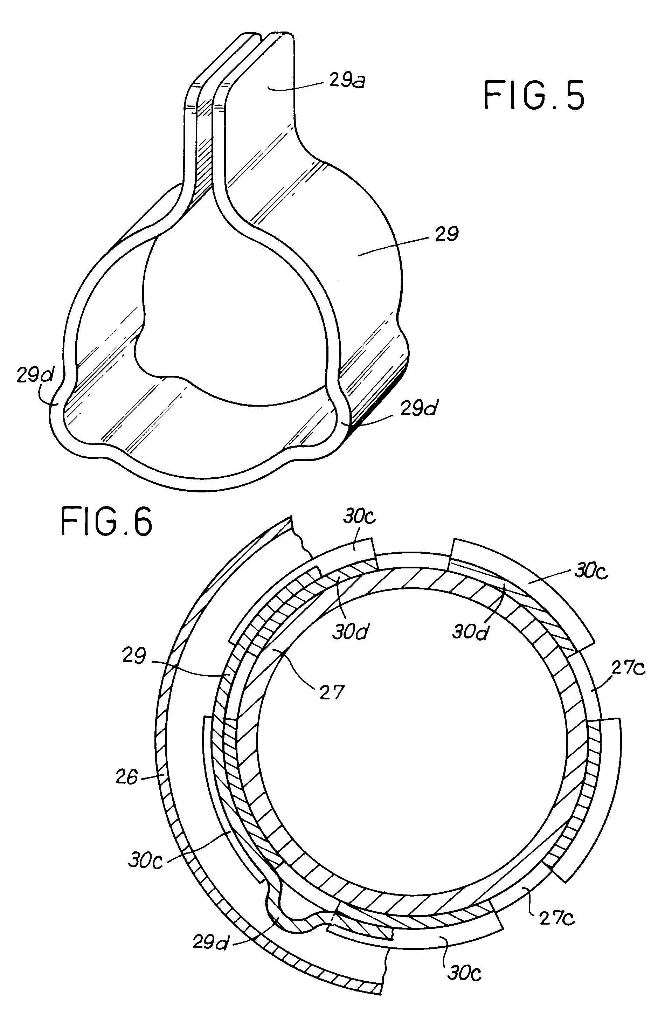

La bague fendue ***29*** est elle-même disposée autour des pattes ***30d*** qu'elle enserre et, comme on le voit bien sur les figures 5 et 6, comporte des nervures longitudinales ***29d*** destinées à faciliter son centrage dans le logement ***28*** ainsi qu'on l'a déjà indiqué plus haut.

Dans le cas de la réalisation visible sur les figures 5 et 6, les pattes ***30d*** s'étendent longitudinalement jusqu'au voisinage de l'entrée ***26a*** de l'élément de connexion. Les fentes ménagées entre deux pattes contigües s'étendent de préférence, vers l'intérieur de l'élément, au moins sur une partie de la portion tronconique ***30b***, éventuellement jusqu'au voisinage de la portion cylindrique ***30a*** de la douille ***30***.

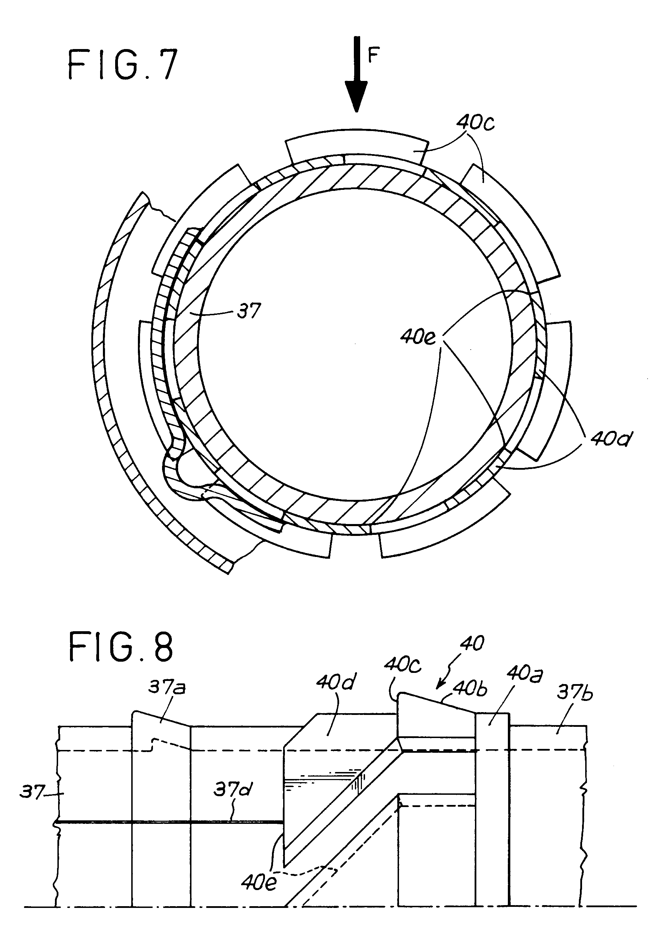

Dans le cas de la variante visible sur les figures 7 et 8 (les éléments des figures 4 à 6 déjà décrits portent les mêmes repères augmentés de 10) les pattes ***40******d*** sont sensiblement hélicoïdales de même que les fentes qui séparent deux pattes contigües. Là encore, il sera préférable que ces fentes s'étendent sur au moins une partie de la portion tronconique ***40******a*** de la douille ***40***.

La mise en place du tube ***27*** s'effectue d'une façon tout à fait analogue à celle qui a été décrite plus haut.

L'extrémité ***27******b*** du tube et la partie cylindrique qui la suit pénètrent dans l'alésage constitué par les pattes ***30******d***, la portion cylindrique ***30******a*** de la douille ***30*** et la zone terminale de la douille interne ***21******a***.

Après que la rampe ***27******a*** du tube a atteint l'entrée ***26******a***, elle écarte radialement les pattes ***30******d*** contre l'effort de serrage exercé sur elles par la bague fendue ***29***. Lorsque l'épaulement ***27******c*** du tube a dépassé l'extrémité ***30******c*** de la portion tronconique ***30******b*** de la douille, les pattes ***30******d*** reviennnent au contact du tube et la bague ***29*** se resserre, constituant ainsi la butée d'immobilisation axiale du tube.

Pour le démontage, il convient encore, à l'aide d'un outil, d'écarter les pattes ***29******a*** de la bague de telle sorte que son diamètre augmente suffisamment pour laisser passer non seulement l'épaulement ***27******c*** et la rampe ***27******a***, mais aussi la douille ***30*** qui est entraînée par eux, au moment de l'extraction du tube.

L'élément de connexion est néanmoins réutilisable. Dans certains cas on préfèrera séparer la douille ***30*** du tube ***27*** et replacer la douille à l'intérieur de l'élément de connexion dans la position représentée sur la figure 4. Le tube peut alors être à nouveau verrouillé dans l'élément de connexion.

Dans d'autres cas, on peut introduire, directement dans l'élément de connexion, le tube ***27*** sur lequel la douille ***30*** sera restée montée, la bague ***29*** permettant alors, par sa dilatation radiale, le passage de l'ensemble.

Dans le cas où la douille indépendante ***40*** a la structure représentée sur les figures 7 et 8, le montage et le démontage s'effectuent de la façon qui vient d'être indiquée. Toutefois, on soulignera un avantage particulier de la forme de réalisation de cette douille.

Il est en effet fréquent que la fabrication des tubes destinés à être emmanchés dans les éléments de connexion du type en question laisse subsister des irrégularités sur la surface extérieure du tube, par exemple, de petites nervures saillantes telles que celles désignées par le repère ***37******d*** sur la figure 8. De telles aspérités risquent d'être préjudiciables à l'étanchéité du raccordement, car elles "blessent" les joints ***24***, aussi bien au cours de l'emmanchement du tube qu'en raison des mouvements vibratoires auxquels le tube peut être soumis en service.

Grâce à la présence, sur les pattes ***40******d*** des arêtes ***40******e*** venant en contact avec la surface extérieure du tube (elles sont laissées aussi "vives" que possible lors de la fabrication de la douille ***40***), les aspérités éventuelles du tube dans la région située entre son extrémité ***37******b*** et la rampe ***37******a*** sont éliminées par ébavurage au cours de la mise en place du tube. Ainsi la surface cylindrique qui vient en contact avec les joints est parfaitement lisse et l'étanchéité du raccordement s'en trouve améliorée.

## Revendications

1. Elément de connexion constitué par un ensemble de deux douilles ***(1a-1b ; 21a-21b)***, interne et externe, définissant entre elles un espace annulaire fermé à l'une de ses extrémités, laquelle extrémité est liée à un manchon ***(6-26)*** sensiblement cylindrique dont l'extrémité libre définit l'entrée ***(6a-26a)*** de l'élément, lesdites douilles étant susceptibles d'enserrer l'extrémité d'un tuyau souple, cependant qu'un logement ***(3,23)*** comprenant un joint torique d'étanchéité ***(4,24)*** est prévu sur la face intérieure de la douille interne ***(1a,21a),*** et que des moyens prévus sur le manchon de l'élément de connexion sont susceptibles d'assurer l'immobilisation axiale d'un tube rigide ou semi-rigide, en coopérant avec un épaulement radial du tube situé à l'extrémité d'une rampe annulaire du tube, placée à une distance appropriée de l'extrémité libre du tube, caractérisé en ce que lesdits moyens d'immobilisation comprennent une bague ***(9,29)*** axialement fendue et élastiquement déformable dans le sens radial, disposée dans un logement annulaire ***(8,28)*** de l'élément de connexion ***(1,21)***, ladite bague constituant une butée radiale pour l'épaulement du tube après son introduction dans l'élément de connexion, et en ce que la face radiale dudit logement annulaire ***(8,28)*** la plus éloignée de l'entrée ***(6a,26a)*** de l'élément est constituée par une portion radiale ***(10c,30c)*** d'une douille ***(10,30)***, distincte de l'élément de connexion et rapportée dans celui-ci, ladite douille ***(10,30)*** présentant, d'une part, une portion cylindrique ***(10a,30a)*** dont l'extrémité radiale la plus éloignée de l'entrée dudit élément forme une paroi radiale annulaire ***(5)*** ou est en butée contre une paroi radiale annulaire ***(25)***, distincte de la douille interne et fixée à celle-ci, ladite paroi radiale fermant le logement comprenant le joint torique, à son extrémité située du côté de l'entrée de l'élément, d'autre part, une portion tronconique ***(10b,30b),*** évasée par rapport à la portion cylindrique, contre laquelle une rampe annulaire ***(7a,27a)*** du tube est susceptible de venir en appui.

2. Elément de connexion selon la revendication 1, caractérisé en ce que la portion radiale ***(30c)*** de la douille ***(30)*** constituant une face radiale du logement ***(28)***, est prolongée, au-delà de la portion tronconique ***(30b)*** vers l'entrée ***(26a)*** de l'élément, par une pluralité de pattes longitudinales ***(30d)***, radialement flexibles et enserrées par la bague fendue ***(29)***.

3. Elément de connexion selon la revendication 2, caractérisé en ce que les pattes flexibles ***(40d)*** sont inclinées par rapport à l'axe de l'élément et en ce que l'un au moins de leurs bords présente une arête vive ***(40e)*** susceptible de venir en contact avec la surface extérieure du tube ***(37)***.

## Claims

1. Connection element constituted by an assembly of two bushes (1a-1b; 21a-21b), an inner bush and an outer bush, defining between them an annular space closed at one of its ends, which end is joined to a substantially cylindrical sleeve (6-26) of which the free end defines the inlet (6a-26a) of the element, said bushes being adapted to grip the end of a supple hosepipe, while a housing (3, 23) comprising an O-ring (4, 24) is provided on the inner face of the inner bush (1a, 21a) and while means provided on the sleeve of the connection element are adapted to ensure the axial immobilization of a rigid or semi-rigid tube, by cooperating with a radial shoulder of the tube situated on the end of an annular ramp of the tube, which ramp is placed at a suitable distance from the free end of the tube, characterized in that said immobilization means comprise a ring (9, 29), axially split and elastically deformable in radial direction, which ring is disposed in an annular housing (8, 28) of the connection element (1, 21) and constitutes a radial stop for the shoulder of the tube, once this has been introduced into the connection element, and in that the radial face of said annular housing (8, 28) most remote from the inlet (6a, 26a) of the element, is constituted by a radial portion (10c, 30c) of a bush (10, 30), which is separate from the connection element and fixed thereon, said bush (10, 30) having, on the one hand, a cylindrical portion (10a, 30a) of which the radial end, which is most remote from the inlet of said element, forms an annular radial wall (5) or is in abutment against an annular radial wall (25), separate from the inner bush and fixed thereto, said radial wall closing the housing which comprises the O-ring, at its end situated on the side of the inlet of the element, and on the other hand, a truncated portion (10b, 30b) which is flared with respect to the cylindrical portion, and against which an annular ramp (7a, 27a) of the tube can abut.

2. Connection element according to claim 1, characterized in that the radial portion (30c) of the bush (30) constituting a radial face of the housing (28), is extended beyond the truncated portion (30b) towards the inlet (26a) of the element, by a plurality of radially flexible longitudinal lugs (30d), which are tightened by the split ring (29).

3. Connection element according to claim 2, characterized in that the flexible lugs (40d) are inclined with respect to the axis of the element and in that one at least of their edges presents a sharp edge (40e) capable of coming into contact with the outer surface of the tube.

## Patentansprüche

1. Verbindungselement, bestehend aus einer Garnitur von zwei Hülsen (*1a-1b*; *21a-21b*), einer inneren und einer äußeren, die zwischen ihnen einen ringförmigen, an einem seiner Enden geschlossenen Raum bilden, welches Ende mit einer im wesentlichen zylindrischen Muffe (*6-26*) verbunden ist, deren freies Ende den Eingang (*6a-26a*) des Elements definiert, wobei die Hülsen geeignet sind, das Ende eines biegsamen Schlauches einzuklemmen, wobei eine Aufnahme (*3,23*), die eine O-Ring-Dichtung (*4,24*) aufweist, an der Innenseite der inneren Hülse (*1a,21a*) vorgesehen ist, und auf der Muffe des Verbindungselements vorgesehene Mittel die axiale Festlegung eines starren oder halbstarren Rohres in Zusammenwirken mit einer radialen Schulter des Rohres gewährleisten können, die am Ende einer ringförmigen Rampe des Rohres angeordnet ist, die sich in einem geeigneten Abstand vom freien Ende des Rohres befindet, dadurch gekennzeichnet, daß die Festlegungsmittel einen axial gespaltenen und in radialer Richtung elastisch verformbaren Ring (*9,29*) aufweisen, der in einer ringförmigen Aufnahme (*8,28*) des Verbindungselements (*1,21*) angeordnet ist, wobei der Ring einen radialen Anschlag für die Schulter des Rohres nach deren Einführung in das Verbindungselement bildet, und daß die radiale Fläche dieser ringförmigen Aufnahme (*8,28*), die vom Eingang (*6a,26a*) des Elements am weitesten entfernt ist, von einem radialen Teil (*10c,30c*) einer vom Verbindungselement verschiedenen und in diesem eingesetzten Hülse (*10,30*) gebildet ist, wobei diese Hülse (*10, 30*) einerseits einen zylindrischen Teil (*10a,30a*) aufweist, dessen radiales, vom Eingang dieses Elements am weitesten entferntes Ende eine radiale, ringförmige Wand (*5*) bildet oder gegen eine radiale, ringförmige, von der inneren Hülse verschiedene Wand (*25*) anliegt und an dieser fixiert ist, wobei diese radiale Wand die die O-Ring-Dichtung umgebende Aufnahme an ihrem auf der Eingangsseite des Elements befindlichen Ende schließt, und anderseits einen kegelstumpfförmigen Teil (*10b,30b*) aufweist, der in bezug auf den zylindrischen Teil aufgeweitet ist, und gegen den sich eine ringförmige Rampe (*7a,27a*) des Rohres abstützen kann.

2. Verbindungselement nach Anspruch 1, dadurch gekennzeichnet, daß der eine radiale Aufnahmefläche (28) bildende radiale Teil (*30c*) der Hülse (*30*) jenseits des kegelstumpfförmigen Teils (*30b*) zum Eingang (*26a*) des Elements hin durch eine Mehrzahl von Längsklauen (*30d*) verlängert ist, die radial biegsam und vom gespaltenen Ring (*29*) eingeschlossen sind .

3. Verbindungselement nach Anspruch 2, dadurch gekennzeichnet, daß die biegsamen Klauen (*40d*) in bezug auf die Achse des Elements geneigt sind und mindestens einer ihrer Ränder eine scharfe Kante (*40e*) aufweist, die mit der Außenfläche des Rohres (*37*) in Kontakt kommen kann.
